# EUROPÄISCHE PATENTSCHRIFT

(11) **EP 3 469 701 B1**
(45) Veröffentlichungstag und Bekanntmachung des Hinweises auf die Patenterteilung: **01.07.2020**
(21) Anmeldenummer: 17724803.6
(22) Anmeldetag: 17.05.2017
(51) Int. Cl.: H02M 3/335, H05B 33/08

(54) **SCHALTNETZTEIL**
SWITCHED MODE POWER SUPPLY
ALIMENTATION EN MODE COMMUTÉ

(30) Priorität: 14.06.2016 DE 102016110846
(43) Veröffentlichungstag der Anmeldung: 17.04.2019
(73) Patentinhaber: Endress+Hauser SE+Co. KG, 79689 Maulburg (DE)
(72) Erfinder: WEIDENBRUCH, Simon, 79541 Lörrach (DE); NZITCHIEU GADEU, Narcisse Michel, 79689 Maulburg (DE); JEHLE, Max, 79664 Wehr (DE)
(74) Vertreter: Andres, Angelika Maria
(86) Internationale Anmeldenummer: PCT/EP2017/061870
(87) Internationale Veröffentlichungsnummer: WO 2017/215873

(56) Entgegenhaltungen:
- JP-A- H0 759 341
- JP-A- H1 093 130
- JP-A- H08 191 568
- JP-A- 2008 159 909
- KR-A- 20110 111 865
- US-A- 5 633 787
- US-A1- 2014 185 172

## Beschreibung

Die Erfindung betrifft ein Schaltnetzteil zur Versorgung eines Verbrauchers mit einer auf einen Sollwert geregelten Ausgangsspannung mit einem Versorgungspfad, der einen über einen Treiber gesteuerten Schaltregler, einen dem Schaltregler nachgeschalteten, galvanisch getrennten Übertrager und eine dem Übertrager nachgeschaltete, einen Gleichrichter umfassende Ausgangsbeschaltung, an deren Ausgang der Verbraucher anschließbar ist, umfasst, und einem Rückkopplungspfad, über den dem Treiber ein über eine Lichtquelle und einen Lichtempfänger übertragenes, die Ausgangsspannung wiedergebendes Signal zugeführt wird, anhand dessen der Treiber die Ausgangsspannung über eine entsprechende Ansteuerung des Schaltreglers auf den Sollwert regelt.

Schaltnetzteile dieser Art werden z. B. zur Versorgung von in der industriellen Messtechnik eingesetzten elektronischen Geräten, wie z.B. Messgeräten, Sensoren, Mess- und/oder Regelschaltungen oder Signalverarbeitungen, mit einer vom Schaltnetzteil bereit gestellten, auf einen vorgegebenen Sollwert geregelten Ausgangsspannung eingesetzt.

Schaltnetzteile zur Erzeugung einer auf eine vorgegebene Sollwert geregelten Ausgangsspannung umfassen regelmäßig einen Versorgungspfad und einen Rückkopplungspfad. Der Versorgungspfad dient dazu, dem Schaltnetzteil eingangsseitig zugeführte elektrische Energie aufzunehmen, umzuwandeln und über einen Ausgang des Schaltnetzteils zur Verfügung zu stellen. Der Rückkopplungspfad dient dazu, ein die am Ausgang anliegende Ausgangsspannung wiedergebendes Signal auf die Eingangsseite zurück zu führen, anhand dessen die Ausgangsspannung mittels einer eingangsseitig vorgesehenen Regelung auf den vorgegebenen Sollwert geregelt wird.

Es gibt eine Vielzahl von Anwendungen, bei denen geregelte Schaltnetzteile zur Versorgung von Verbrauchern in explosionsgefährdeten Bereichen eingesetzt werden. In explosionsgefährdeten Bereichen gelten strenge Sicherheitsvorschriften, die unter anderem das Ziel haben eine Funkenbildung, die unter Umständen eine Explosion auslösen könnte, zu vermeiden. Darüber hinaus dürfen in explosionsgefährdeten Bereichen in der Regel nur Schaltnetzteile eingesetzt werden, deren über eine externe Energiequelle speisbare Primärseite von deren den Verbraucher versorgenden Sekundärseite galvanisch getrennt ist. Bei geregelten Schaltnetzteilen ist somit sowohl im Versorgungspfad als auch im Rückkopplungspfad jeweils eine galvanische Trennung vorzusehen, die den am Einsatzort geltenden Explosionsschutz-Sicherheitsvorschriften genügt.

Entsprechende Sicherheitsanforderungen finden sich z.B. in dem von der Internationalen Elektrotechnischen Kommission (IEC) herausgegeben Standard IEC 60079-11 in der Fassung vom 27.01.2012. Dort sind z.B. in Teil 11 Anforderungen an die Isolation von der Explosionsschutzklasse der Eigensicherheit (Ex-i) genügenden galvanischen Trennungen aufgeführt. Danach kann eine für diese Schutzklasse ausreichende Isolation über eine feste Isolation bewirkt werden, die für Anwendungen in einem Spannungsbereich von bis zu 60 V DC mindestens 0,5 mm bzw. in einem Spannungsbereich von bis zu 230 V AC mindestens 1 mm dick zu sein hat. Alternativ kann sie auch durch einen Luftspalt bewirkt werden, der für Anwendungen in einem Spannungsbereich von bis 60 V DC mindestens 3 mm bzw. in einem Spannungsbereich von bis zu 230 V AC mindestens 10 mm breit zu sein hat.

Zur Einhaltung dieser Vorgaben können im Rückkopplungspfad Optokoppler mit einem entsprechend großen Isolationsabstand eingesetzt werden. Im Handel erhältliche Optokoppler, die diesen Anforderungen genügen, sind jedoch auch bei Abnahme größerer Stückzahlen sehr teuer.

Eine deutlich kostengünstigere Alternative bilden eine Lichtquelle und einen separaten, darauf auftreffendes Licht in eine elektrische Größe umwandelnden Lichtempfänger umfassende Signalübertrager. So ist beispielsweise in der DE 10 2010 012 064 A1 ein diskret aufgebauter Signalübertrager beschrieben, der eine auf einer Seite einer Leiterplatte angeordnete Lichtquelle, z.B. eine Infrarot-Leuchtdiode, umfasst, die Licht durch die Leiterplatte hindurch sendet, dass dann von einem auf der anderen Seite der Leiterplatte angeordneten Lichtempfänger empfangen wird.

Zur optischen Signalübertragung verwendbare, handelsübliche Lichtquellen, wie z.B. Infrarot-Leuchtdioden, dürfen jedoch nur mit einer Speisespannung betrieben werden, die in der Regel deutlich niedriger ist, als am Ausgang von Schaltnetzteilen üblicher Weise benötigte Ausgangsspannungen. Zur Reduktion der über die Lichtquelle abfallenden Speisespannung kann der Lichtquelle ein entsprechend großer Vorwiderstand vorgeschaltet werden.

Zur optischen Signalübertragung geeignete, handelsübliche Leuchtdioden müssen mit einem vergleichsweise hohen Strom betrieben werden. So müssen Infrarot-Leuchtdioden beispielsweise mit einem Strom in der Größenordnung von bis zu 50 mA, manchmal sogar von bis 100 mA betrieben werden, um hinreichend Licht durch eine Leiterplatte mit einer für Anwendungen in explosionsgefährdeten Bereichen ausreichenden Dicke oder einen Luftspalt hierfür ausreichender Breite hindurch zu übertragen. Das bedeutet, dass am Vorwiderstand eine entsprechend große Verlustleistung umgesetzt wird. Müssen über den Vorwiderstand 15 Volt abfallen, so entsteht bei einem Strom in der Größenordnung von 50 mA bis 100 mA eine Verlustleistung in der Größenordnung von 0,75 W bis 1,5 W.

Würde man einen solchen optischen Signalübertrager im Rückkopplungspfad eines Schaltnetzteils einsetzen, so würde die über den Vorwiderstand umgesetzte Verlustleistung den Wirkungsgrad des Schaltnetzteils verschlechtern. Darüber hinaus besteht das Problem, dass die Verlustleistung in Wärme umgesetzt wird. Hierdurch können je nach Größe der über den Vorwiderstand abfallenden Spannung und des von der Lichtquelle benötigten Stromes im Bereich des Vorwiderstandes Temperaturen auftreten, die den Einsatz des Signalübertragers in explosionsgefährdeten Bereichen unmöglich machen.

Die Druckschrift JPH0759341 beschreibt ein galvanisch isoliertes Schaltnetzteil mit einer Fotodiode in der Spannungsrückkopplung. Spannung und Strom der Fotodiode werden mit einer Zenerdiode und einem Shunt-Regler stabilisiert, so dass kein Vorwiderstand nötig ist.

Es ist eine Aufgabe der Erfindung ein kostengünstig herstellbares, geregeltes Schaltnetzteil anzugeben, dass in explosionsgefährdeten Bereichen eingesetzt werden kann.

Hierzu umfasst die Erfindung gemäß Anspruch 1 ein Schaltnetzteil zur Versorgung eines Verbrauchers mit einer auf einen Sollwert geregelten Ausgangsspannung mit
- einem Versorgungspfad, der einen über einen Treiber gesteuerten Schaltregler, einen dem Schaltregler nachgeschalteten, galvanisch getrennten Übertrager und eine dem Übertrager nachgeschaltete, einen Gleichrichter umfassende Ausgangsbeschaltung, an deren Ausgang der Verbraucher anschließbar ist, umfasst, und
- einem Rückkopplungspfad, über den dem Treiber ein über eine Lichtquelle und einen Lichtempfänger übertragenes, die Ausgangsspannung wiedergebendes Signal zugeführt wird, anhand dessen der Treiber die Ausgangsspannung über eine entsprechende Ansteuerung des Schaltreglers auf den Sollwert regelt,
   wobei der Rückkopplungspfad einen Stromregler umfasst, der einen über die Lichtquelle fließenden Strom auf einen der Ausgangsspannung entsprechenden Stromwert regelt, und- wobei die Lichtquelle ohne einen der Lichtquelle vorgeschalteten Vorwiderstand in den Rückkopplungspfad eingesetzt ist, dadurch gekennzeichnet, dass der Rückkopplungspfad einen Spannungsregler umfasst, der einen Abwärtsspannungsschaltregler, insb. einen synchronen Abwärtsspannungsschaltregler, umfasst und eine bei einer Ausgangsspannung in der Größenordnung von 4,5 V bis 45 V über die Lichtquelle abfallende Speisespannung auf einen unterhalb des Sollwerts liegenden festen Wert in der Größenordnung von 3 V bis 5 V regelt, die Lichtquelle (13) ein Leuchtelement, nämlich eine Leuchtdiode, insb. eine Infrarot-Leuchtdiode, umfasst, dessen Helligkeit sich in Abhängigkeit von einem durch es hindurch fließenden Strom verändert, und zwischen der Lichtquelle und dem Lichtempfänger eine im Bereich der Wellenlänge des von der Lichtquelle emittierten Lichts transparenter Isolator, nämlich eine Leiterplatte, angeordnet ist.

Eine bevorzugte Ausgestaltung der ersten Weiterbildung sieht vor, dass der Isolator zumindest in dessen vom Licht der Lichtquelle durchstrahlten Bereich eine Dicke von größer gleich 0,5 mm aufweist.

Eine bevorzugte Weiterbildung zeichnet sich dadurch aus, dass
- der Lichtempfänger ein lichtempfindliches Element, insb. einen Fototransistor, umfasst, das darauf auftreffendes Licht in eine der Helligkeit entsprechende elektrische Größe umwandelt, und
- an den Lichtempfänger eine Messschaltung angeschlossen ist, die die elektrische Größe erfasst, die Größe in ein die Ausgangsspannung
wiedergebendes elektrisches Signal umwandelt und das Signal dem daran angeschlossenen Treiber zuführt.

Eine bevorzugte Weiterbildung zeichnet sich dadurch aus, dass der Spannungsregler
- eingangsseitig mit einem auf dem Potential der Ausgangsspannung liegenden Abgriff eines parallel zum Ausgang des Schaltnetzteils geschalteten Querzweigs verbunden ist, und
- ausgangsseitig über die Lichtquelle und einen durch den Stromregler verlaufenden Strompfad mit einem mit einem Bezugspotential verbundenen Abgriff des Querzweigs verbunden ist.

Eine bevorzugte Weiterbildung zeichnet sich dadurch aus, dass der Stromregler
- einen Eingang umfasst, der mit einem in einem parallel zum Ausgang des Schaltnetzteils geschalteten Querzweig vorgesehenen Abgriff, insb. einem zwischen zwei die über den Querzweig abfallende Ausgangsspannung aufteilenden Elementen eines im Querzweig vorgesehenen Spannungsteilers angeordneten Abgriff, verbunden ist, und
- einen durch die Lichtquelle und einen der Lichtquelle nachfolgenden, durch den Stromregler hindurch verlaufenden Strompfad hindurch fließenden Strom auf einen dem am Eingang des Stromreglers anliegenden Potential entsprechenden Stromwert regelt.

Eine bevorzugte Weiterbildung zeichnet sich dadurch aus, dass der Stromregler einen einstellbaren Shunt-Regler, insb. einen einstellbaren Zener-Shunt-Regler, umfasst.

Eine bevorzugte Weiterbildung zeichnet sich dadurch aus, dass ein Dämpfungskondensator vorgesehen ist, der in einem der Lichtquelle nachgeschalteten, parallel zu dem durch den Stromregler verlaufenden Strompfad verlaufenden Schaltungszweig angeordnet ist.

Eine bevorzugte Weiterbildung zeichnet sich dadurch aus, dass die den Gleichrichter umfassende Ausgangsbeschaltung weitere Komponenten, insb. eine dem Gleichrichter nachgeschaltete Sicherung, ein dem Gleichrichter nachgeschaltetes, eine Glättung der gleichgerichteten Spannung bewirkendes Schaltungselement, insb. ein R-C Glied und/oder ein L-C Glied, einen dem Gleichrichter nachgeschalteten Energiespeicher, insb. ein Pufferkondensator, und/oder eine dem Gleichrichter nachgeschaltete hochohmige Grundlast, insb. einen hochohmigen Lastwiderstand, umfasst.

Eine bevorzugte Weiterbildung zeichnet sich dadurch aus, dass der Spannungsregler als Bestandteil einer Schaltung ausgebildet ist, die eine dem Spannungsregler vorgeschaltete Eingangsbeschaltung, eine dem Spannungsregler nachgeschaltete Ausgangsbeschaltung, einen dem Spannungsregler nachgeschalteten Energiespeicher, insb. einen Pufferkondensator, eine dem Spannungsregler vorgeschaltete Sicherung, eine dem Spannungsregler nachgeschaltete Sicherung und/oder einen dem Spannungsregler nachgeschalteten Spannungsbegrenzer, insb. einen gegeneinander geschaltete Dioden, insb. Z-Dioden und Tunneldioden, umfassenden Spannungsbegrenzer, umfasst.

Die Erfindung und weitere Vorteile werden nun anhand der Figuren der Zeichnung, in denen ein Ausführungsbeispiel dargestellt ist, näher erläutert; gleiche Elemente sind in den Figuren mit denselben Bezugszeichen versehen.
- Fig. 1 zeigt:: ein Blockschaltbild eines erfindungsgemäßen Schaltnetzteils;
- Fig. 2 zeigt:: ein Ausführungsbeispiel der Ausgangsbeschaltung von Fig. 1; und
- Fig. 3 zeigt:: ein Ausführungsbeispiel einer den Spannungsregler von Fig. 1 umfassenden Schaltung.

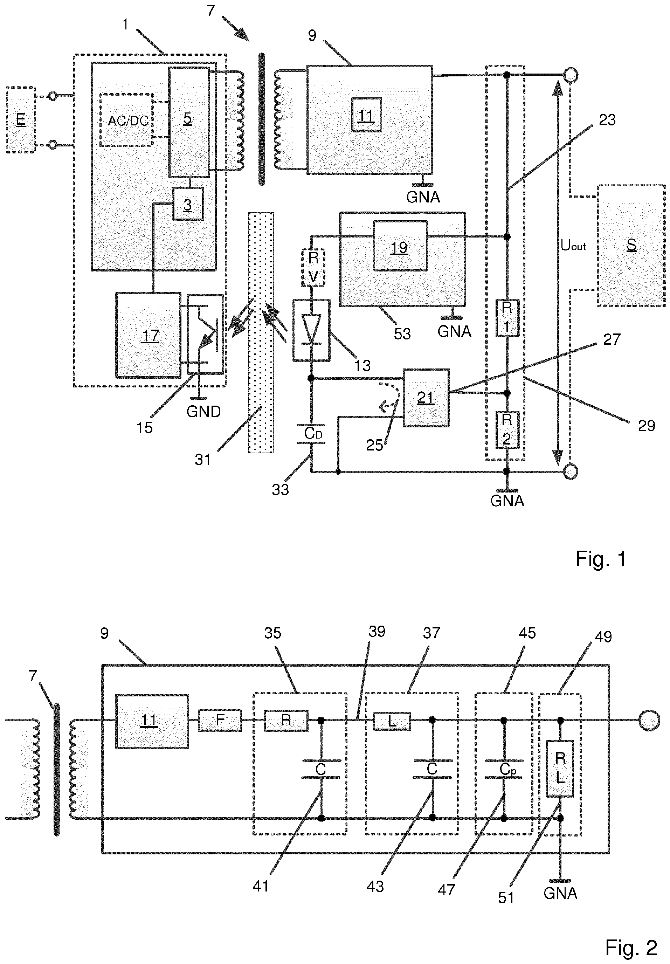

Fig. 1 zeigt ein Blockschaltbild eines erfindungsgemäßen Schaltnetzteils zur Versorgung eines ausgangsseitig daran anschließbaren Verbrauchers S mit einer auf einen Sollwert Uₛ geregelten Ausgangsspannung Uₒᵤₜ. Das Schaltnetzteil umfasst eine Primärseite und eine von der Primärseite galvanisch getrennte Sekundärseite. Auf der Primärseite ist eine Eingangsbeschaltung 1 vorgesehen, an deren Eingang eine externe Energieversorgung E anschließbar ist. Auf der Sekundärseite ist ein Ausgang vorgesehen, an den der Verbraucher S anschließbar ist.

Das Schaltnetzteil umfasst einen eingangsseitig mit dem Eingang und ausgangsseitig mit dem Ausgang des Schaltnetzteils verbundenen galvanisch getrennten Versorgungspfad, der einen in der Eingangsbeschaltung 1 vorgesehenen, über einen Treiber 3 gesteuerten Schaltregler 5, einen dem Schaltregler 5 nachgeschalteten galvanisch getrennten Übertrager 7 und eine dem Übertrager 7 nachgeschaltete, ausgangsseitig mit dem Ausgang verbundene Ausgangsbeschaltung 9 umfasst, wobei die Ausgangsbeschaltung 9 einen Gleichrichter 11 umfasst.

Sofern das Schaltnetzteil über eine als Wechselspannungsquelle ausgebildete Energieversorgung E gespeist werden soll, ist in der Eingangsbeschaltung 1 zusätzlich ein dem Schaltregler 5 vorgeschalteter AC/DC Wandler vorzusehen. Wird das Schaltnetzteil über eine als Gleichspannungsquelle ausgebildete Energieversorgung E gespeist, so kann ebenfalls ein Wandler eingesetzt werden, der aber in diesem Fall nicht zwingend erforderlich ist.

Das Schaltnetzteil umfasst einen Rückkopplungspfad, über den dem Treiber 3 ein über eine Lichtquelle 13 und einen Lichtempfänger 15 übertragenes, die am Ausgang des Schaltnetzteils anliegende Ausgangsspannung Uₒᵤₜ wiedergebendes Signal zugeführt wird. Dabei ist der Treiber 3 derart ausgebildet, dass er die am Ausgang anliegende Ausgangsspannung Uₒᵤₜ anhand des die Ausgangsspannung Uₒᵤₜ wiedergebenden Signals über eine entsprechende Ansteuerung des Schaltreglers 5 auf den hierfür vorgegebenen Sollwert Uₛ regelt.

Zur Signalübertragung wird eine Lichtquelle 13 eingesetzt, die ein Leuchtelement umfasst, dessen Helligkeit sich in Abhängigkeit von einem durch es hindurch fließenden Strom verändert. Ein Beispiel hierfür sind handelsübliche Leuchtdioden, z.B. Infrarot-Leuchtdioden.

Der von der Lichtquelle 13 räumlich getrennte Lichtempfänger 15 umfasst ein lichtempfindliches Element, dass darauf auftreffendes Licht in eine elektrische Größe umwandelt. Hierzu eignen sich z.B. Fototransistoren, die in einem der Helligkeit des darauf auftreffenden Lichts entsprechenden Maße durchsteuern. Das auf den Lichtempfänger 15 auftreffende Licht wird mittels einer an den Lichtempfänger 15 angeschlossenen Messschaltung 17 erfasst und in ein die Ausgangsspannung Uₒᵤₜ wiedergebendes elektrische Signal umgewandelt, das dann dem an die Messschaltung 17 angeschlossenen Treiber 3 zugeführt wird.

Erfindungsgemäß umfasst der Rückkopplungspfad einen Spannungsregler 19 und einen Stromregler 21. Spannungsregler 19 und Stromregler 21 sind derart ausgebildet, dass der Spannungsregler 19 eine über die Lichtquelle 13 abfallende Speisespannung aktiv auf einen unterhalb des für die Ausgangsspannung Uₒᵤₜ vorgegebenen Sollwerts Uₛ liegenden fest vorgegebenen Wert regelt, während der Stromregler 21 einen über die Lichtquelle 13 fließenden Strom auf einen der Ausgangsspannung Uₒᵤₜ entsprechenden Stromwert einstellt.

Spannungsregler 19 bieten den Vorteil, dass sie nur einen sehr geringen Ruhestrom, z.B. einen Ruhestrom in der Größenordnung von 10 µA bis 20 µA, benötigen, um eine Speisespannung für die nachgeschaltete Lichtquelle 13 zu erzeugen, die deutlich unterhalb der eingangsseitig daran anliegenden Ausgangsspannung Uₒᵤₜ liegt. So können beispielsweise anhand von Ausgangsspannungen Uₒᵤₜ in der Größenordnung von 4,5 V bis 45 V auf verlustarme Weise Speisespannungen in der Größenordnung 3 V bis 5 V erzeugt werden.

Hierzu besonders gut geeignete Spannungsregler 19 umfassen vorzugsweise einen im englischsprachigen Raum unter der Bezeichnung step-down converter oder buck converter bekannten Abwärtsspannungsschaltregler, insb. einen synchronen Abwärtsspannungsschaltregler. Ein Beispiel hierfür ist der von der Firma Linear Technology unter der Produktbezeichnung LTC3642 vertriebene Abwärtsspannungsregler, der nur einen sehr geringen Ruhestrom in der Größenordnung von 18 µA benötigt, um eingangsseitig daran anliegende Spannungen im Bereich von 4,5 V bis 45 V in ausgangsseitig ausgegebene Spannungen im Bereich von 3 V bis 5 V umzuwandeln. Dabei kann über diesen Abwärtsspannungsschaltregler ein Strom von bis zu 50 mA zur Lichtquelle 13 fließen.

Der Spannungsregler 19 bietet den Vorteil, dass er die über die Lichtquelle 13 abfallende Speisespannung drastisch reduziert, ohne dass dabei eine hohe Verlustleistung umgesetzt wird, die zu einer lokalen Erwärmung des Schaltnetzteils führen würde.

In dem dargestellten Ausführungsbeispiel ist der Spannungsregler 19 an einen parallel zum Ausgang des Schaltnetzteils geschalteten Querzweig 23 angeschlossen, über den die Ausgangsspannung Uₒᵤₜ abfällt. Dabei ist der Spannungsregler 19 eingangsseitig mit einem auf dem Potential der Ausgangsspannung Uₒᵤₜ liegenden Abgriff des Querzweigs 23 verbunden und ausgangsseitig über die Lichtquelle 13 und einen durch den Stromregler 21 verlaufenden Strompfad 25 mit einem mit einem Bezugspotential GNA verbundenen Abgriff des Querzweigs 23 verbunden.

Der Stromregler 21 umfasst einen Eingang 27, der mit einem im Querzweig 23 vorgesehenen Abgriff verbunden ist, der auf einem der Ausgangsspannung Uₒᵤₜ entsprechenden Potential liegt. Hierzu ist im Querzweig 23 vorzugsweise ein Spannungsteiler 29 vorgesehen, zwischen dessen die Spannung teilenden Elementen, z. B. den hier dargestellten Widerständen R1, R2, der mit dem Eingang 27 verbundene Abgriff angeordnet ist.

Der Stromregler 21 regelt den auf dem Strompfad durch den Stromregler 21 hindurch fließenden Strom - und damit auch den über die Lichtquelle 13 fließenden Strom - auf einen dem eingangsseitig an dessen Eingang 27 anliegenden Potential entsprechenden Stromwert. Hierzu besonders gut geeignete Stromregler 21 umfassen vorzugsweise einstellbare Shunt-Regler, z.B. Zener-Shunt-Regler. Ein Beispiel hierfür ist der von der Firma Texas Instruments unter der Produktbezeichnung LM431 vertriebene Stromregler.

Dabei bietet die über den Spannungsregler19 bewirkte Reduktion der Speisespannung den Vorteil, dass sich hierdurch auch die über den Stromregler 21 umgesetzten Verlustleistung entsprechend reduziert.

Im Unterschied zu für den Einsatz in explosionsgefährdeten Bereichen geeigneten, teuren Optokoppler, sind in erfindungsgemäßen Schaltnetzteilen einsetzbare Spannungsregler 19 und Stromregler 21 deutlich kostengünstigere Massenartikel, so dass erfindungsgemäße Schaltnetzteile trotz der größeren Anzahl an Bauteilen deutlich kostengünstiger herstellbar sind, als mit Optokopplern ausgestattete Schaltnetzteile.

Auch bei erfindungsgemäßen Schaltnetzteilen kann der Lichtquelle 13 ein Vorwiderstand R_{V} vorgeschaltet sein. Dieser ist jedoch aufgrund der durch den vorgeschalteten Spannungsregler 19 bewirkten Spannungsreduktion insb. auch bei vergleichsweise hohen Spannungen, z.B. Spannungen von bis zu 60V, nicht zwingend erforderlich. Während bei aus dem Stand der Technik bekannten Signalübertragern mit über einen Vorwiderstand gespeisten Lichtquellen regelmäßig ein großer Vorwiderstand mit einer Nennleistung von größer gleich 1W benötigt wird, wird in erfindungsgemäßen Schaltnetzteilen vorzugsweise ganz auf einen Vorwiderstand verzichtet. Alternativ kann ein auch mechanisch sehr kleiner Vorwiderstand eingesetzt, über den nur eine dementsprechend geringe Verlustleistung umgesetzt wird.

Darüber hinaus können in erfindungsgemäßen Schaltnetzteile optional weitere Komponenten, insb. deren Funktion und/oder deren Betriebssicherheit, insb. in explosionsgefährdeten Bereichen, verbessernde Komponenten vorgesehen sein.

Eine besonders bevorzugte Ausführungsform sieht vor zwischen der Lichtquelle 13 und dem Lichtempfänger 15 ein im Bereich der Wellenlänge des von der Lichtquelle 13 emittierten Lichts transparenten Isolator 31, z.B. eine Leiterplatte, anzuordnen. Der Isolator 31 bietet den Vorteil einer deutlichen Verbesserung der Isolation der durch den Signalübertrager bewirkten galvanischen Trennung. Dabei genügt es bereits, wenn der Isolator 31 zumindest in dessen vom Licht der Lichtquelle 13 durchstrahlten Bereich eine Dicke von größer gleich 0,5 mm aufweist, um eine für den Einsatz in explosionsgefährdeten Bereichen ausreichende Isolation bei Spannungen von bis zu 60 V DC zu gewährleisten. Hierdurch kann die Baugröße des Schaltnetzteils im Vergleich zu Ausführungsformen, bei denen die Isolation über einen Luftspalt bewirkt wird, deutlich verringert werden. Dabei bietet die Erfindung den Vorteil, dass auch der aufgrund des zu durchstrahlenden Isolators 31 erhöhte Energiebedarf der Lichtquelle 13 durch das Zusammenwirken von Spannungsregler 19 und Stromregler 21 zur Verfügung gestellt werden kann, ohne dass hierbei eine große Verlustleistung umgesetzt wird.

Eine weitere optionale Maßnahme besteht darin, einen Dämpfungskondensator C_{D} vorzusehen, der in einem der Lichtquelle 13 nachgeschalteten zusätzlichen, parallel zu dem durch den Stromregler 21 verlaufenden Strompfad 25 verlaufenden Schaltungszweig 33 angeordnet ist. Dieser Dämpfungskondensator C_{D} bewirkt eine schnelle und effektive Dämpfung von durch Schwankungen der Ausgangsspannung Uₒᵤₜ verursachten Schwingungen, wie sie beispielsweise beim Einschalten des Schaltnetzteils, bei plötzlich auftretenden sehr hohen Belastungen und/oder bei sehr schnell sehr stark wechselnden Belastungen des Schaltnetzteils auftreten können.

Darüber hinaus kann auch die den Gleichrichter 11 umfassende Ausgangsbeschaltung 9 weitere Komponenten enthalten. Fig. 2 zeigt hierzu ein Ausführungsbeispiel der Ausgangsbeschaltung 9, bei dem dem Gleichrichter 11 im Längszweig 39 eine den auf der Sekundärseite fließenden Strom begrenzende Sicherung F nachgeschaltet ist. Diese erhöht die Betriebssicherheit im Falle einer Fehlfunktion eines dieser vorausgehenden Bauteils.

Zusätzlich können dem Gleichrichter 11 eine Glättung der gleichgerichteten Spannung bewirkende Schaltungselemente, wie z.B. ein R-C Glied 35 und/oder ein L-C Glied 37, nachgeschaltet sein. Fig. 2 zeigt als Beispiel hierzu ein dem Gleichrichter 11 nachgeschaltetes R-C-Glied 35, das einen dem Gleichrichter 11 im Längszweig 39 nachgeschalteten Widerstand R und einen in einem den Längszweig 39 mit dem sekundärseitigen Bezugspotential GNA verbindenden Querzweig 41 angeordneten Kondensator C umfasst. Dem R-C-Glied 31 ist ein L-C-Glied 33 nachgeschaltet, dass eine dem Gleichrichter 11 im Längszweig 39 nachgeschaltete Induktivität L und einen in einem weiteren, den Längszweig 39 mit dem sekundärseitigen Bezugspotential GNA verbindenden Querzweig 43 angeordneten Kondensator C umfasst.

Zusätzlich kann die Ausgangsbeschaltung 9 optional mit einem dem Gleichrichter 11 nachgeschalteten Energiespeicher 45 ausgestattet sein. Als Beispiel hierzu zeigt Fig. 2 einen in einem weiteren, den Längszweig 39 mit dem Bezugspotential GNA verbindenden Querzweig 47 angeordneten Pufferkondensator Cₚ.

Darüber hinaus kann optional eine dem Gleichrichter 11 nachgeschaltete hochohmige Grundlast 49 vorgesehen sein, über die überschüssige, auf die Sekundärseite übertragene Energie umgesetzt werden kann. Als Beispiel hierzu zeigt Fig. 2 einen in einem weiteren, den Längszweig 39 mit dem Bezugspotential GNA verbindenden Querzweig 51 angeordneten hochohmigen Lastwiderstand R_{L}. Über diese Grundlast 49 ist auch dann eine Grundauslastung des Schaltnetzteils sicher gestellt, wenn an den Ausgang kein Verbraucher S angeschlossen ist oder ein an den Ausgang angeschlossener Verbraucher S keine Energie aufnimmt.

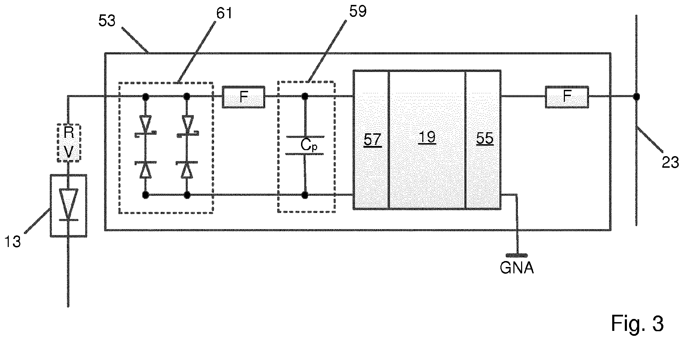

Alternativ und/oder zusätzlich zu den vorgenannten Komponenten können auch im Rückkopplungspfad weitere optionale Komponenten vorgesehen sein. Hierzu kann der Spannungsregler 19 beispielsweise als Bestandteil einer weitere Komponenten umfassenden Schaltung 53 ausgebildet sein. Fig. 3 zeigt ein Ausführungsbeispiel einer den Spannungsregler 19 umfassenden Schaltung 53.

In der Schaltung 53 ist dem Spannungsregler 19 eingangsseitig eine Eingangsbeschaltung 55 vorgeschaltet und ausgangsseitig eine Ausgangsbeschaltung 57 nachgeschaltet. Hierzu verwendbare Eingangs- und Ausgangsbeschaltung 55, 57 werden regelmäßig vom Hersteller des verwendeten Spannungsreglers 19 empfohlen und sind daher hier nicht im Detail dargestellt.

Genau wie in der den Gleichrichter 9 umfassenden Ausgangsbeschaltung 9 kann auch in der den Spannungsregler 19 umfassenden Schaltung 53 ein hier dem Spannungsregler 19 nachgeschalteter Energiespeicher 59 vorgesehen sein. Fig. 3 zeigt als Beispiel hierzu einen Pufferkondensator Cp, der in einen parallel zum Spannungsregler 19 geschalteten Querzweig eingesetzt ist.

Des Weiteren kann die Schaltung 53 optional eine dem Spannungsregler 19 vorgeschaltete Sicherung F und/oder eine dem Spannungsregler 19 nachgeschaltete Sicherung F umfassen.

Darüber hinaus kann die Schaltung 53 optional einen dem Spannungsregler 19 nachgeschalteten Spannungsbegrenzer 61 umfassen, der die von der Schaltung 53 ausgegebene Spannung im Falle einer Fehlfunktion eines der dem Spannungsbegrenzer 61 vorgeschalteten Bauteile begrenzt. Fig. 3 zeigt als Beispiel hierzu einen Spannungsbegrenzer 61 mit zwei jeweils parallel zum Spannungsregler 19 und parallel zueinander geschalteten Querzweigen, in denen jeweils zwei gegeneinander geschaltete Dioden, z.B. eine Zener-Diode und eine Tunneldiode, vorgesehen sind.
- 1: Eingangsbeschaltung
- 3: Treiber
- 5: Schaltregler
- 7: Übertrager
- 9: Ausgangsbeschaltung
- 11: Gleichrichter
- 13: Lichtquelle
- 15: Empfänger
- 17: Messschaltung
- 19: Spannungsregler
- 21: Stromregler
- 23: Querzweig
- 25: Strompfad
- 27: Eingang
- 29: Spannungsteiler
- 31: Isolator
- 33: Schaltungszweig
- 35: R-C Glied
- 37: L-C Glied
- 39: Längszweig
- 41: Querzweig
- 43: Querzweig
- 45: Energiespeicher
- 47: Querzweig
- 49: hochohmige Grundlast
- 51: Querzweig
- 53: Schaltung
- 55: Eingangsbeschaltung
- 57: Ausgangsbeschaltung
- 59: Energiespeicher
- 61: Spannungsbegrenzer

## Patentansprüche

1. Schaltnetzteil zur Versorgung eines Verbrauchers (S) mit einer auf einen Sollwert (Uₛ) geregelten Ausgangsspannung (Uₒᵤₜ) mit
- einem Versorgungspfad, der einen über einen Treiber (3) gesteuerten Schaltregler (5), einen dem Schaltregler (5) nachgeschalteten, galvanisch getrennten Übertrager (7) und eine dem Übertrager (7) nachgeschaltete, einen Gleichrichter (11) umfassende Ausgangsbeschaltung (9), an deren Ausgang der Verbraucher (S) anschließbar ist, umfasst, und
- einem Rückkopplungspfad, über den dem Treiber (3) ein über eine Lichtquelle (13) und einen Lichtempfänger (15) übertragenes, die Ausgangsspannung (Uₒᵤₜ) wiedergebendes Signal zugeführt wird, anhand dessen der Treiber (3) die Ausgangsspannung (Uₒᵤₜ) über eine entsprechende Ansteuerung des Schaltreglers (5) auf den Sollwert (Uₛ) regelt,
- wobei der Rückkopplungspfad einen Stromregler (21) umfasst, der einen über die Lichtquelle (13) fließenden Strom auf einen der Ausgangsspannung (Uₒᵤₜ) entsprechenden Stromwert regelt, und
- wobei die Lichtquelle (13) ohne einen der Lichtquelle (13) vorgeschalteten Vorwiderstand (Rv) in den Rückkopplungspfad eingesetzt ist,
**dadurch gekennzeichnet, dass**
- der Rückkopplungspfad einen Spannungsregler (19) umfasst, der einen Abwärtsspannungsschaltregler, insb. einen synchronen Abwärtsspannungsschaltregler, umfasst und eine bei einer Ausgangsspannung (Uₒᵤₜ) in der Größenordnung von 4,5 V bis 45 V über die Lichtquelle (13) abfallende Speisespannung auf einen unterhalb des Sollwerts (Uₛ) liegenden festen Wert in der Größenordnung von 3 V bis 5 V regelt,
- die Lichtquelle (13) ein Leuchtelement, nämlich eine Leuchtdiode, insb. eine Infrarot-Leuchtdiode, umfasst, dessen Helligkeit sich in Abhängigkeit von einem durch es hindurch fließenden Strom verändert, und
- zwischen der Lichtquelle (13) und dem Lichtempfänger (15) eine im Bereich der Wellenlänge des von der Lichtquelle (13) emittierten Lichts transparenter Isolator (31), nämlich eine Leiterplatte, angeordnet ist.

2. Schaltnetzteil gemäß Anspruch 1, **dadurch gekennzeichnet, dass** der Isolator (31) zumindest in dessen vom Licht der Lichtquelle (13) durchstrahlten Bereich eine Dicke von größer gleich 0,5 mm aufweist.

3. Schaltnetzteil gemäß Anspruch 1 bis 2, **dadurch gekennzeichnet, dass**
- der Lichtempfänger (15) ein lichtempfindliches Element, insb. einen Fototransistor, umfasst, das darauf auftreffendes Licht in eine der Helligkeit entsprechende elektrische Größe umwandelt, und
- an den Lichtempfänger (15) eine Messschaltung (17) angeschlossen ist, die die elektrische Größe erfasst, die Größe in ein die Ausgangsspannung (Uₒᵤₜ) wiedergebendes elektrisches Signal umwandelt und das Signal dem daran angeschlossenen Treiber (3) zuführt.

4. Schaltnetzteil gemäß Anspruch 1 bis 3, **dadurch gekennzeichnet, dass** der Spannungsregler (19)
- eingangsseitig mit einem auf dem Potential der Ausgangsspannung (Uₒᵤₜ) liegenden Abgriff eines parallel zum Ausgang des Schaltnetzteils geschalteten Querzweigs (23) verbunden ist, und
- ausgangsseitig über die Lichtquelle (13) und einen durch den Stromregler (21) verlaufenden Strompfad (25) mit einem mit einem Bezugspotential (GNA) verbundenen Abgriff des Querzweigs (23) verbunden ist.

5. Schaltnetzteil gemäß Anspruch 1 bis 4, **dadurch gekennzeichnet, dass** der Stromregler (21)
- einen Eingang (27) umfasst, der mit einem in einem parallel zum Ausgang des Schaltnetzteils geschalteten Querzweig (23) vorgesehenen Abgriff, insb. einem zwischen zwei die über den Querzweig (23) abfallende Ausgangsspannung (Uₒᵤₜ) aufteilenden Elementen (R1, R2) eines im Querzweig (23) vorgesehenen Spannungsteilers (29) angeordneten Abgriff, verbunden ist, und
- einen durch die Lichtquelle (13) und einen der Lichtquelle (13) nachfolgenden, durch den Stromregler (21) hindurch verlaufenden Strompfad (25) hindurch fließenden Strom auf einen dem am Eingang (27) des Stromreglers (21) anliegenden Potential entsprechenden Stromwert regelt.

6. Schaltnetzteil gemäß Anspruch 1 bis 5, **dadurch gekennzeichnet, dass** der Stromregler (21) einen einstellbaren Shunt-Regler, insb. einen einstellbaren Zener-Shunt-Regler, umfasst.

7. Schaltnetzteil gemäß Anspruch 1 bis 6, **dadurch gekennzeichnet, dass** ein Dämpfungskondensator (C_{D}) vorgesehen ist, der in einem der Lichtquelle (13) nachgeschalteten, parallel zu dem durch den Stromregler (21) verlaufenden Strompfad (25) verlaufenden Schaltungszweig (33) angeordnet ist.

8. Schaltnetzteil gemäß Anspruch 1 bis 7, **dadurch gekennzeichnet, dass** die den Gleichrichter (11) umfassende Ausgangsbeschaltung (9) weitere Komponenten, insb. eine dem Gleichrichter (11) nachgeschaltete Sicherung (F), ein dem Gleichrichter (11) nachgeschaltetes eine Glättung der gleichgerichteten Spannung bewirkendes Schaltungselement, insb. ein R-C Glied (35) und/oder ein L-C Glied (37), einen dem Gleichrichter (11) nachgeschalteten Energiespeicher (45), insb. ein Pufferkondensator (Cₚ), und/oder eine dem Gleichrichter (11) nachgeschaltete hochohmige Grundlast (49), insb. einen hochohmigen Lastwiderstand (R_{L}), umfasst.

9. Schaltnetzteil gemäß Anspruch 1 bis 8, **dadurch gekennzeichnet, dass** der Spannungsregler (19) als Bestandteil einer Schaltung (53) ausgebildet ist, die eine dem Spannungsregler (19) vorgeschaltete Eingangsbeschaltung (55), eine dem Spannungsregler (19) nachgeschaltete Ausgangsbeschaltung (57), einen dem Spannungsregler (19) nachgeschalteten Energiespeicher (59), insb. einen Pufferkondensator (Cₚ), eine dem Spannungsregler (19) vorgeschaltete Sicherung (F), eine dem Spannungsregler (19) nachgeschaltete Sicherung (F) und/oder einen dem Spannungsregler (19) nachgeschalteten Spannungsbegrenzer (61), insb. einen gegeneinander geschaltete Dioden, insb. Z-Dioden und Tunneldioden, umfassenden Spannungsbegrenzer (61), umfasst.

## Claims

1. Switched-mode power supply designed to supply power to a consumer (S), with an output voltage (Uₒᵤₜ) regulated to a target value (Uₛ), with
- a supply path, which comprises a switching regulator controlled by a driver (3), a galvanically isolated transformer (7) which is situated downstream from the switching regulator (5), and an output circuit (9) comprising a rectifier (11) which is situated downstream from the transformer (7), wherein the consumer (S) can be connected to the output of said output circuit, and
- a feedback path via which a signal is supplied to the driver (3), said signal representing the output voltage (Uₒᵤₜ) and being transmitted via a light source (13) and a light receiver (15), wherein, on the basis of said signal, the driver (3) regulates the output voltage (Uₒᵤₜ) to the target value (Uₛ) via a corresponding control of the switching regulator (5),
- wherein the feedback path comprises a current regulator (21), which regulates a current flowing via the light source (13) to a current value corresponding to the output voltage (Uₒᵤₜ), and
- wherein the light source (13) is used in the feedback path without a series resistor (Rv) upstream from the light source (13),
**characterized in that**
- the feedback path comprises a voltage regulator (19), which comprises a downward voltage switching regulator, particularly a synchronous downward voltage switching regulator, and regulates a feed voltage dropping over the light source (13) at an output voltage (Uₒᵤₜ) in the range of 4.5 V to 45 V to a fixed value, in the range of 3 V to 5 V, below the target value (Uₛ),
- wherein the light source (13) comprises a light element, specifically a light emitting diode, particularly an infrared light emitting diode, whose brightness changes depending on a current flowing through it, and
- wherein an isolator (31), specifically a printed circuit board, is arranged between the light source (13) and the light receiver (15), said isolator being transparent in the range of the wavelength of the light emitted by the light source (13).

2. Switched-mode power supply as claimed in Claim 1, **characterized in that** the isolator (31) has at least a thickness greater than or equal to 0.5 mm in the area through which light from the light source (13) passes.

3. Switched-mode power supply as claimed in Claim 1 to 2, **characterized in that**
- the light receiver (15) comprises a light-sensitive element, particularly a phototransistor, which converts incident light into an electric variable corresponding to the brightness, and
- a measuring circuit (17) is connected to the light receiver (15), wherein said circuit measures the electric variable, converts the variable to an electric signal that represents the output voltage (Uₒᵤₜ) and supplies the signal to the driver (3) which is connected thereto.

4. Switched-mode power supply as claimed in Claim 1 to 3, **characterized in that** the voltage regulator (19) is connected
- on the input side to a tap of a transverse branch (23) that is switched in parallel to the output of the switched-mode power supply, said tap being located on the potential of the output voltage (Uₒᵤₜ), and
- on the output side to a tap of the transverse branch (23) that is connected to a reference potential (GNA) via the light source (13) and a current path (25) running through the current regulator (21).

5. Switched-mode power supply as claimed in Claim 1 to 4, **characterized in that** the current regulator (21)
- comprises an input (27) which is connected to a tap provided in a transverse branch (23) that is switched in parallel with the output of the switched-mode power supply, particularly a tap arranged between two elements (R1, R2) of a voltage divider (29) provided in the transverse branch (23) and dividing the output voltage (Uₒᵤₜ) dropping over the transverse branch (23), and
- regulates a current that flows through the light source (13) and a current path (25) passing through the current regulator (21) downstream of the light source (13) to a current value corresponding to a potential present at the input (27) of the current regulator (21).

6. Switched-mode power supply as claimed in Claim 1 to 5, **characterized in that** the current regulator (21) comprises an adjustable shunt regulator, particularly an adjustable Zener shunt regulator.

7. Switched-mode power supply as claimed in Claim 1 to 6, **characterized in that** a damping capacitor (C_{D}) is provided which is arranged in a circuit branch (33) that is downstream of the light source (13) and parallel to the current path (25) passing through the regulator (21).

8. Switched-mode power supply as claimed in Claim 1 to 7, **characterized in that** the output circuit (9) comprising the rectifier (11) comprises additional components, particularly a fuse (F) situated downstream from the rectifier (11), a switch element located downstream of the rectifier (11) and causing a smoothening of the rectified voltage, particularly an R-C element (35) and/or an L-C element (37), an energy accumulator (45) switched downstream of the rectifier (11), particularly a buffer capacitor (Cₚ), and/or a high-impendence basic load (49) switched downstream of the rectifier (11), particularly a high-impedance load resistor (R_{L}).

9. Switched-mode power supply as claimed in Claim 1 to 8, **characterized in that** the voltage regulator (19) is designed as an integral part of a circuit (53), which comprises an input circuit (55) upstream of the voltage regulator (19), an output circuit (57) downstream of the voltage regulator (19), an energy accumulator downstream of the voltage regulator (19), particularly a buffer capacitor (Cₚ), a fuse (F) upstream of the voltage regulator (19), a fuse (F) downstream of the voltage regulator (19) and/or a voltage limiter (61) downstream of the voltage regulator (19), particularly a voltage limiter (61) comprising diodes connected back to back, particularly Zener diodes and tunnel diodes.

## Revendications

1. Alimentation à découpage destinée à l'alimentation d'un consommateur (S), avec une tension de sortie (Uₒᵤₜ) régulée à une valeur de consigne (Uₛ), avec
- un trajet d'alimentation, qui comprend un régulateur à découpage commandé par un circuit d'attaque (3), un transformateur (7) à isolation galvanique, situé en aval du régulateur à découpage (5), et un circuit de sortie (9) comprenant un redresseur (11), situé en aval du transformateur (7), à la sortie duquel circuit peut être raccordé le consommateur (S), et
- un trajet de contre-réaction, par l'intermédiaire duquel est restitué au circuit d'attaque (3) un signal reproduisant la tension de sortie (Uₒᵤₜ), lequel signal est transmis via une source de lumière (13) et un récepteur de lumière (15), signal au moyen duquel le circuit d'attaque (3) régule la tension de sortie (Uₒᵤₜ), via une commande correspondante du régulateur à découpage (5), à la valeur de consigne (Uₛ),
- le trajet de contre-réaction comprenant un régulateur de courant (21), lequel régulateur régule un courant circulant à travers la source de lumière (13) à une valeur de courant correspondant à la tension de sortie (Uₒᵤₜ), et
- la source de lumière (13) étant utilisée, dans le trajet de contre-réaction, sans résistance série couplée en amont de la source de lumière (13),
**caractérisé**
- **en ce que** le trajet de contre-réaction comprend un régulateur de tension (19), qui comprend un régulateur à découpage abaisseur de tension, notamment un régulateur à découpage abaisseur de tension synchrone, et régule une tension d'alimentation chutant aux bornes de la source de lumière (13) à une tension de sortie (Uₒᵤₜ) de l'ordre de 4,5 V à 45 V jusqu'à une valeur fixe de l'ordre de 3 V à 5 V en dessous de la valeur de consigne (Uₛ),
- **en ce que** la source de lumière (13) comprend un élément électroluminescent, à savoir une diode électroluminescente, notamment une diode électroluminescente infrarouge, dont la luminosité varie en fonction d'un courant qui la traverse, et
- **en ce qu'**est disposé, entre la source de lumière (13) et le récepteur de lumière (15), un corps isolant (31), notamment une carte de circuit imprimé, qui est transparent dans la gamme de longueur d'onde de la lumière émise par la source de lumière (13).

2. Alimentation à découpage selon la revendication 1, **caractérisée en ce que** le corps isolant (31) présente au moins une épaisseur supérieur ou égale à 0,5 mm dans la zone traversée par la lumière de la source de lumière (13).

3. Alimentation à découpage selon la revendication 1 à 2, **caractérisée**
- **en ce que** le récepteur de lumière (15) comprend un élément photosensible, notamment un phototransistor, qui convertit la lumière incidente en une grandeur électrique correspondant à la luminosité, et
- **en ce qu'**un circuit de mesure (17) est connecté au récepteur de lumière (15), lequel circuit mesure la grandeur électrique, convertit la grandeur en un signal électrique qui reproduit la tension de sortie (Uₒᵤₜ) et fournit le signal au circuit d'attaque (3) qui y est raccordé.

4. Alimentation à découpage selon la revendication 1 à 3, **caractérisée en ce que** le régulateur de tension (19) est relié
- côté entrée, avec une prise se trouvant au potentiel de la tension de sortie (Uₒᵤₜ) d'une branche de dérivation (23) couplée parallèlement à la sortie de l'alimentation à découpage, et
- côté sortie, via la source de lumière (13) et un trajet de courant (25) passant par le régulateur de courant (21), à une prise de la branche de dérivation (23) connectée à un potentiel de référence (GNA).

5. Alimentation à découpage selon la revendication 1 à 4, **caractérisée en ce que** le régulateur de courant (21)
- comprend une entrée (27), laquelle est reliée à une prise prévue dans une branche de dérivation (23) couplée parallèlement à la sortie de l'alimentation à découpage, notamment une prise disposée entre deux éléments (R1, R2) d'un diviseur de tension (29) prévu dans la branche de dérivation (23) et divisant la tension de sortie (Uₒᵤₜ) chutant aux bornes de la branche de dérivation (23), et
- régule un courant traversant la source de lumière (13) et un trajet de courant (25) passant par le régulateur de courant (21) couplé en aval de la source de lumière (13), à une valeur de courant correspondant au potentiel présent à l'entrée (27) du régulateur de courant (21).

6. Alimentation à découpage selon la revendication 1 à 5, **caractérisée en ce que** le régulateur de courant (21) comprend un régulateur shunt réglable, notamment un régulateur shunt Zener réglable.

7. Alimentation à découpage selon la revendication 1 à 6, **caractérisée en ce qu'**est prévu un condensateur d'amortissement (C_{D}), lequel est disposé dans une branche du circuit (33) couplée en aval de la source de lumière (13), en parallèle du trajet de courant (25) traversant le régulateur de courant (21).

8. Alimentation à découpage selon la revendication 1 à 7, **caractérisée en ce que** le circuit de sortie (9) comprenant le redresseur (11) comprend des composants supplémentaires, notamment un fusible (F) situé en aval du redresseur (11), un élément de commutation couplé en aval du redresseur (11) et provoquant un lissage de la tension redressée, notamment un circuit RC (35) et/ou un circuit LC (37), un accumulateur d'énergie (45) couplé en aval du redresseur (11), notamment un condensateur tampon (Cₚ), et/ou une charge de base (49) à haute impédance, couplée en aval du redresseur (11), notamment une résistance de charge (R_{L}) à haute impédance.

9. Alimentation à découpage selon la revendication 1 à 8, **caractérisée en ce que** le régulateur de tension (19) est constitué en tant qu'élément d'un circuit (53), lequel comprend un circuit d'entrée (55) couplé en amont du régulateur de tension (19), un circuit de sortie (57) couplé en aval du régulateur de tension (19), un accumulateur d'énergie couplé en aval du régulateur de tension (19), notamment un condensateur tampon (Cₚ), un fusible (F) couplé en amont du régulateur de tension (19), un fusible (F) couplé en aval du régulateur de tension (19) et/ou un limiteur de tension (61) couplé en aval du régulateur de tension (61), notamment un limiteur de tension (61) comprenant des diodes tête bêche, notamment des diodes Zener et des diodes tunnel.
